# EUROPEAN PATENT SPECIFICATION

(11) **EP 3 915 869 B1**
(45) Date of publication and mention of the grant of the patent: **22.03.2023**
(21) Application number: 20400008.7
(22) Date of filing: 28.05.2020
(51) Int. Cl.: E05B 65/00, E05C 9/08, E05C 9/18, B64C 1/14, E05B 17/00

(54) **A DOOR FOR SEPARATING TWO ENVIRONMENTS WITH DIFFERENT PRESSURES**
TÜR ZUR TRENNUNG VON ZWEI UMGEBUNGEN MIT UNTERSCHIEDLICHEN DRÜCKEN
PORTE POUR SÉPARER DEUX ENVIRONNEMENTS PRÉSENTANT DIFFÉRENTES PRESSIONS

(43) Date of publication of application: 01.12.2021
(73) Proprietor: AIRBUS HELICOPTERS DEUTSCHLAND GmbH, 86609 Donauwörth (DE)
(72) Inventor: Stuber, Robert, 86688 Marxheim (DE)
(74) Representative: GPI Brevets

(56) References cited:
- US-A- 4 720 065
- US-A1- 2017 183 079
- US-A1- 2020 071 978
- Deco Bliss: "How To Fit A Sliding Bolt", , 3 February 2011 (2011-02-03), page 1, XP054981070, Retrieved from the Internet: URL:https://www.youtube.com/watch?v=qjPePX c6bTs [retrieved on 2020-11-03]

## Description

The present embodiments relate to a door that is adapted to separate two environments with different pressures. The present embodiments further relate to an aircraft with at least one door that is adapted to separate two environments with different air pressures.

Doors that are adapted to separate two environments with different pressures can be found in various different applications. Examples for such applications include doors in aircrafts, spacecrafts, pressure chambers, submarines, etc. When such doors are used in aircrafts, they usually fulfill the following major functions: they close the aircrafts in operation for maintaining a required internal pressure therein, they contribute to carrying flight loads in corresponding lower deck cargo compartments, they allow passengers and crew to enter and exit the aircrafts, and they allow external access to the corresponding lower aircraft compartments.

Most state-of-the-art doors of pressurized aircrafts are plug doors. Those plug doors are designed to seal themselves by using the pressure difference between the pressurized cabin and the surrounding atmosphere of the aircraft. The higher pressure on the inside of the aircraft forces the door leaf, which is often wedgeshaped, into the door frame, thereby sealing the door and preventing it from being opened until the pressure difference is small enough.

The opening sequence of a plug door often starts with an inward movement followed by or combined with a lifting of the door leaf in order to achieve clearance of the door stops in the door frame for a subsequent movement to open the door. In the closed position, the door leaf usually floats in forward-backward and up-down direction on a sliding surface between a door stop in the door frame and a latch element that is in connection with the door leaf.

The document EP 3 275 779 A1 describes a load transfer interface for a vehicle door that comprises an outer skin and at least one beam that is connected to the outer skin, wherein the outer skin and the at least one beam define a vehicle door plane, the load transfer interface comprising at least one door stop fitting that is provided to transfer pressure loads from the vehicle door to an associated vehicle structural frame, the at least one door stop fitting being provided for rotation in an associated rotation plane, wherein the associated rotation plane is at least approximately parallel to the vehicle door plane. The door stopper has a ball part that is connected to a disc-shaped part, whereby the ball part is accommodated in the at least one door stop fitting and sealed therein by means of a suitable gasket. The document further describes an aircraft cabin door having such a load transfer interface, as well as an aircraft having such an aircraft cabin door.

Document EP 2 554 472 A1 describes a loads interface, particularly a loads interface of an aircraft door with a background structure and a loads transferring flange. The background structure includes a beam, a shell-like outer skin preferably made from fiber reinforced plastics, and an edge-frame that is adapted to and connected with the beam and the outer skin. The loads transferring flange is adapted and mounted to at least the beam and designed to transmit transverse forces and/or circumferential and/or longitudinal forces and torsional/bending moments resulting from transferring the circumferential and/or longitudinal forces in the load transferring flange. The load transferring flange is further provided with at least three angled flanges.

Document EP 2 007 621 A1 describes a system having at least one locking member mounted on the door or on the doorframe, located along at least one of the edges of the door or of the doorframe, this locking member being able to move between a closed position, in which it bears against a corresponding bearing region of the doorframe or of the door, a what is called "inward opening" intermediate position, which it occupies during the opening sequence of the door, in which it bears respectively against the doorframe or the door so as to move the door toward the interior of the aircraft cabin, and an open position, in which it is completely disengaged from said corresponding bearing region, thus permitting the outward movement of the door relative to the doorframe without an upward or downward vertical movement. The system further comprises means for actuating each locking member between said closed and open positions and means for locking each locking member in the closed position.

Document US 4 552 326 A describes a safety device for an aircraft door opening outwardly by a preliminary movement enabling stops borne by said door to be disengaged from stops borne by the frame thereof, after which complete opening of the door is obtained by a simple thrust or pull, wherein said safety device comprises at least one mobile lock and one stop, one mounted on the door and the other on the frame thereof and adapted to cooperate with one another to interrupt the prior movement of disengagement of the stops on the door and the stops on the frame, and said mobile lock is controlled by manometric means receiving the pressures inside and outside the aircraft.

All the above-mentioned documents describe door stops with planar surfaces. A floating of the door leaf in forward-backward and up-down direction on planar surfaces between the door stop in the door frame and the door stop in the door leaf is very limited. It mostly depends on the friction between the door stops and the pressure difference between the inside and outside of the aircraft.

Document US 5 305 969 A describes a latch lock mechanism for opening and closing a translating motion-type aircraft door. The aircraft door is seated in an opening formed in the aircraft fuselage. A hinge connects the aircraft door to the fuselage and allows the door to move outwards away from the fuselage opening. The latch lock mechanism of this invention includes a latch shaft that is mounted to the door by a set of follower bearings that are axially offset from the shaft. The shaft is rotated by a lift lock mechanism that includes a lift lock cam and a cam follower that tracks the cam, and a door drive linkage that is attached to the cam follower for rotating the latch shaft. The lift lock cam is rotated by a handle shaft that is actuated by a handle. The aircraft door is further provided with outwardly extending adjustable door stop pins. The fuselage is provided with fuselage stop pads that complement the stop pins. When the door is properly seated in the opening, the stop pins are aligned with the stop pads. When the aircraft is in pressurized flight, the pressure inside the fuselage urges the door outwards; the stop pins abut the stop pads so as to secure the door in place. Thus, latch lock mechanism and door stop pins and pads are separate devices that involve an increase in weight as well as an increase in installation and maintenance costs compared to integrated solutions. Citation is made of: XP054981070 (video: Deco Bliss: "How To Fit A Sliding Bolt" https://www.youtube.com/watch?v=qjPePXc6bTs), US20 17183079, US4720065 and US2020071978.

It is, therefore, an objective to provide a new door that is adapted to separate two environments with different pressures. Furthermore, it is an objective to provide an aircraft with a new door that is adapted to separate two environments with different air pressures. This objective is solved by a door comprising the features of claim 1.

More specifically, a door that is adapted to separate a first environment with a first pressure and a second environment with a second pressure that is smaller than the first pressure may comprise a door frame that comprises a door stop; a door leaf that is adapted to close the door frame; and an actuating system that comprises a latch element that interacts with the door stop to latch the door leaf such that the door is in a latched state. The door stop may comprise a first portion of a round shaped interface. The latch element may comprise a first end with a movable connection that movably connects the latch element with the door leaf, and a second end that has a second portion of the round shaped interface, wherein, in the latched state, the difference between the first pressure and the second pressure puts a pressure on the door leaf such that the second portion of the round shaped interface engages with the first portion of the round shaped interface and the door leaf moves at the movable connection relative to the latch element, thereby performing an adjustment of the position of the door leaf relative to the door frame.

As an example, the first portion of the round shaped interface may be a round shaped cavity and the second portion of the round shaped interface may be a round shaped protrusion, whereby the round shaped protrusion of the latch element is pushed into the round shaped cavity of the door stop.

As another example, the first portion of the round shaped interface may be a round shaped protrusion and the second portion of the round shaped interface may be a round shaped cavity, whereby the round shaped cavity of the latch element is pushed against the round shaped protrusion of the door stop.

A moveable interface element (e.g., a latch element) may substitute the fixed door stops of prior art technology. As an example, consider the scenario in which the door is installed in an aircraft having a fuselage. In this scenario, in the closed position, the latch element is hooked to a fuselage stop (i.e., to a door stop within the door frame). The latch element may have a spherical shaped surface that allows the latch element to swing and turn in all directions. This swing movement of the latch element compensates the relative movement of the door leaf relative to the door frame and thereby relative to the fuselage. Thereby, a floating door principle will be achieved.

If desired, the latch element may have a spherical shaped surface, a cylindrical surface, or a combination of cylindrical surfaces and/or spherical surfaces. Thus, the latch element may achieve a swinging movement of the door leaf relative to the door frame.

By using such latch elements on both sides of the door leaf, the door leaf is hooked onto the door stops of the door frame like a pendulum. Thus, the door leaf may position itself automatically in equilibrium within the door frame when it is subject to a pressure difference between the inside and outside of the fuselage.

By way of example, a lock element may monitor the correct position of the latch element in the latched position. According to the invention, the lock element secures the latch element in the latched position.

Illustratively, a load transfer may be performed between the door leaf and the door frame via pendulum interface elements (e.g., latch elements). The pendulum interface elements may allow swing and/or turn movements of the door leaf in order to compensate for movements of the door leaf relative to the door frame and thereby relative to the fuselage of the aircraft. Thus, the latch elements hook the door leaf into the door stops of the door frame. Thereby, a floating door principle with a self-positioning feature is achieved.

By way of example, the latch elements may have a spherical surface, a cylindrical surface, or a combination of a cylindrical and a spherical surface. The surface of the latch elements is a sliding surface that allows a swing and turn movement of the latch element.

The interface elements (e.g., the latch elements) are hooked onto the respective door stops of the door frame when the door is in the closed position. The interface elements can only be moved away from the respective door stops through an inward movement of the door leaf. Due to the pressure difference between the two environments that are separated by the door and the pendulum hooking principle, no force or torque (e.g., another pressure force, seal compression force, friction forces, ratcheting forces, etc.) in any direction other than an inward movement can disengage the respective latch elements from the associated door stops.

The moveable latch principle allows to open the door without a lifting movement of the door.

The swing movement of a latch element on a spherical surface achieves a floating door principle with a self-positioning feature of the door. The self-positioning feature of the door simplifies the door rigging procedure.

The mechanism for operating the latch and the lock can be simplified. As an example, no elements are required to withstand forces or torque that tend to disengage the latch. As another example, the mechanism for operating the latch does not need to carry heavy loads and can be sized small.

According to one aspect, the second portion of the round shaped interface comprises a round shaped cavity or a round shaped protrusion with at least one of a spherical shape, a partially spherical shape, a cylindrical shape, or a partially cylindrical shape.

According to one aspect, the latch element pivots around the movable connection relative to the door leaf.

According to one aspect, the movable connection comprises at least one of a bearing, a hinge, a bolt, a fork, or a rod.

According to the invention, the actuating system further comprises a lock element that comprises a first end with a movable connection, and a second end that interacts with the door stop to secure the latch element such that the door is in a secured and locked state.

According to one aspect, the actuating system further comprises a drive shaft; a latch operating mechanism that connects the latch element with the drive shaft; and a lock operating mechanism that connects the lock element with the drive shaft.

According to one aspect, the actuating system further comprises a drive shaft actuating mechanism that moves the latch element via the drive shaft and the latch operating mechanism and the lock element via the drive shaft and the lock operating mechanism such that the door transitions from the secured and locked state to an unlocked and unlatched state.

According to one aspect, the door leaf is in a closed position when the door is in the secured and locked state and wherein the door leaf is movable from the closed position to an opened position when the door is in the unlocked and unlatched state.

According to one aspect, a move of the door leaf from the closed position to the opened position comprises an inward door leaf movement that disengages the second portion of the round shaped interface from the first portion of the round shaped interface.

According to one aspect, the latch operating mechanism further comprises a lever that is fixedly attached to the drive shaft at a fixed connection.

According to one aspect, the latch operating mechanism further comprises an additional lever that is pivotally connected with the lever at a pivotable connection and that comprises a long hole.

According to one aspect, the latch element comprises a bolt that connects the latch element with the additional lever at the long hole, wherein the bolt is slidable in the long hole such that the latch element is movable relative to the additional lever.

According to one aspect, the lock operating mechanism further comprises a lever that is fixedly attached to the drive shaft at a fixed connection.

According to one aspect, the lock operating mechanism further comprises an additional lever that is pivotally connected with the lever at a first pivotable connection and with the second end of the lock element at a second pivotable connection.

Moreover, an aircraft may comprise at least one door as described above.

Embodiments are outlined by way of example in the following description with reference to the attached drawings. In these attached drawings, identical or identically functioning components and elements are labeled with identical reference numbers and characters and are, consequently, only described once in the following description.
- Figure 1A shows a perspective view of an illustrative aircraft having several aircraft doors that are adapted to separate two environments with different pressures in accordance with some embodiments,
- Figure 1B is a diagram of an illustrative door leaf that is adapted to close a door frame in accordance with some embodiments,
- Figure 2 is a diagram of an illustrative door with a door frame having a door stop with a round shaped cavity and a door leaf with a latch element having a round shaped protrusion in accordance with some embodiments,
- Figure 3A is a diagram of an illustrative door with a door leaf that performs a movement in a first direction relative to a door frame in accordance with some embodiments,
- Figure 3B is a diagram of an illustrative door with a door leaf that performs a movement in a second direction relative to a door frame in accordance with some embodiments,
- Figure 4A is a diagram of an illustrative latch and lock mechanism with a flexible side beam in accordance with some embodiments,
- Figure 4B is a diagram of an illustrative latch and lock mechanism with a flexible bearing in accordance with some embodiments,
- Figure 5A is a diagram of an illustrative door with a latch and lock mechanism in the latched and secured position in accordance with some embodiments,
- Figure 5B is a diagram of the illustrative door with latch and lock mechanism of Figure 5A in the latched and unsecured position in accordance with some embodiments,
- Figure 5C is a diagram of the illustrative door with latch and lock mechanism of Figure 5A in a partially unlatched and unsecured position and with an inward moved door leaf in accordance with some embodiments,
- Figure 5D is a diagram of the illustrative door with latch and lock mechanism of Figure 5A in a fully unlatched and unsecured position and with an inward moved door leaf in accordance with some embodiments, and
- Figure 5E is a diagram of the illustrative door with latch and lock mechanism of Figure 5A in a fully unlatched and unsecured position and with an outward moved door leaf in accordance with some embodiments.

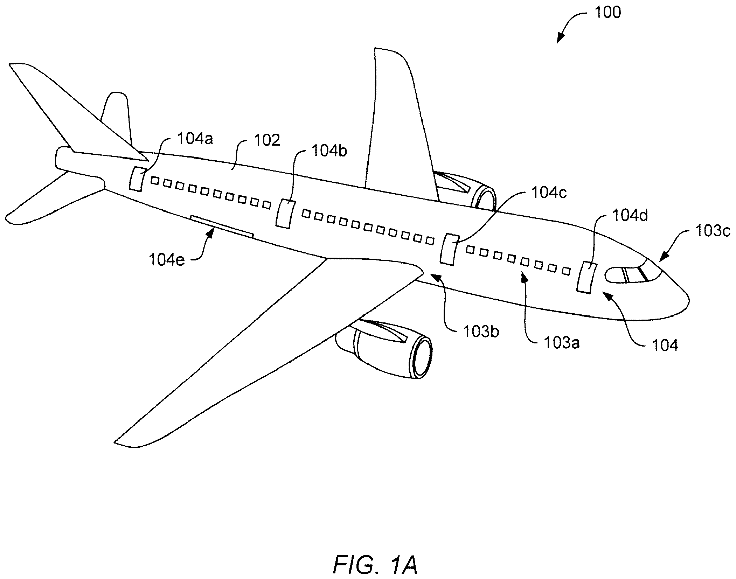

Figure 1A shows an aircraft 100 with an aircraft airframe 102, which is sometimes also referred to as fuselage 102. Illustratively, the aircraft 100 comprises a passenger cabin 103a, a cargo deck 103b, and a flight deck or cockpit 103c. If desired, the aircraft 100 is accessible via a plurality of aircraft doors 104, which exemplarily comprises several cabin access doors 104a, 104b, 104c and 104d, as well as one or more cargo deck access doors 104e. By way of example, the passenger cabin 103a and the flight deck 103c are accessible via the cabin access doors 104a, 104b, 104c and 104d, and the cargo deck 103b is accessible via the one or more cargo deck access doors 104e.

The plurality of aircraft doors 104 may be adapted to close the aircraft airframe 102 (i.e., fuselage 102 of the aircraft 100) in a fluid-tight manner. If desired, at least one, and preferably each one, of the plurality of aircraft doors 104 is associated with at least one emergency slide.

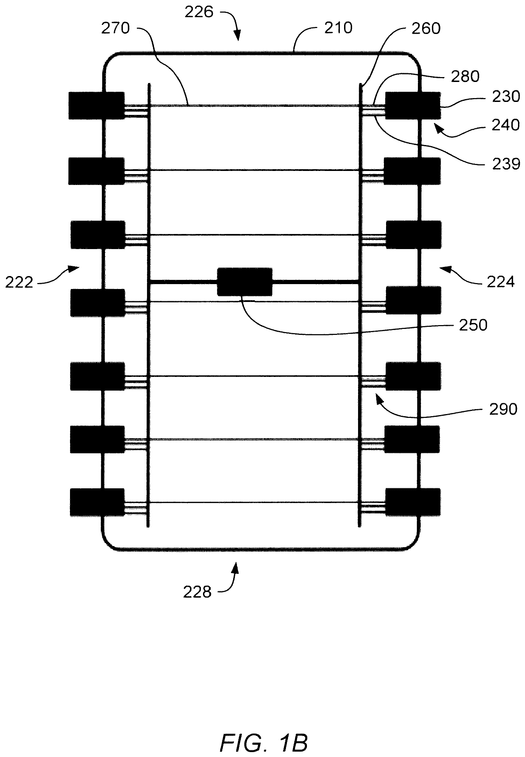

If desired, aircraft 100 may include at least one door 200 as described below with reference to Figures 1B to 5E. In other words, one or more of the plurality of aircraft doors 104 may be a door 200 as described below with reference to Figures 1B to 5E.

One or more of the plurality of aircraft doors 104 may include a door frame with a door stop that has a first portion of a round shaped interface and a door leaf with a latch element that has a second portion of the round shaped interface on one end and a movable connection with the door leaf on the other end.

As an example, the first portion of the round shaped interface may be a round shaped cavity and the second portion of the round shaped interface may be a round shaped protrusion. As another example, the first portion of the round shaped interface may be a round shaped protrusion and the second portion of the round shaped interface may be a round shaped cavity.

During a flight, the air pressure outside the aircraft 100 may be smaller than the air pressure inside the cabin 103a and/or the cargo deck 103b. The difference between the air pressure inside the cabin 103a and/or the cargo deck 103b and the air pressure outside the aircraft 100 may put a pressure on the door leaf such that the round shaped protrusion of the latch element is pushed into the round shaped cavity of the door stop. The door leaf may move at the movable connection relative to the latch element, thereby performing an adjustment of the position of the door leaf relative to the door frame.

As shown in Figure 1A, aircraft 100 is embodied by an airplane. However, the present embodiments are not limited to airplanes. Instead, any door that separates two environments with different pressures is likewise contemplated. By way of example, the present door may alternatively be applied to spacecrafts, pressure chambers, submarines, and so on.

Consequently, the present door is not limited to aircraft doors, but can likewise be applied to any arbitrary door that separates two environments with different pressures. However, for purposes of illustration, the present door is hereinafter described with respect to aircraft doors.

Figure 1B is a diagram of an illustrative door leaf 210 that is adapted to closing of a door frame of a door that separates two environments with different pressures in accordance with some embodiments. Door leaf 210 may have beams 270 that reinforce the structure of door leaf 210. For example, beams 270 may carry loads on door leaf 210.

Beams 270 may reinforce the structure of door leaf 210 horizontally between a left side 222 and a right side 224. Alternatively, beams 270 may reinforce the structure of door leaf 210 vertically between an upper side 226 and a lower side 228. If desired, beams 270 may reinforce the structure of door leaf 210 horizontally and vertically or in any other direction (e.g., between the upper left and the lower right side of door leaf 210 and/or between the upper right and the lower left side of door leaf 210).

Figure 1B also shows an illustrative actuating system 290. Actuating system 290 includes a latch element 230. As shown in Figure 1B, actuating system 290 includes a plurality of latch elements 230.

Illustratively, latch elements 230 has a first end with a movable connection. The movable connection movably connects latch elements 230 with door leaf 210. As an example, the movable connection of each latch element 230 may be attached to a beam 270, if desired.

The latch elements 230 has a second end that has a round shaped protrusion for engaging with a door stop of a door frame.

The actuating system 290 includes a lock element 240. Actuating system 290 may include a plurality of lock elements 240, if desired. For example, actuating system 290 may include a lock element 240 for every latch element 230. If desired, each latch element 230 may have an associated lock element 240 that is adapted to securing of the respective latch element 230. In Figure 1B, lock element 240 may be placed between door leaf 210 and latch element 230 (i.e., it may be hidden in Figure 1B behind the latch element 230). When the door leaf 210 closes the associated door frame, the lock element 240 secures the latch element 230 such that the door is in a secured and locked state.

Actuating system 290 may have a drive shaft 260 for operating the latch elements 230 and/or the lock elements 240. As an example, actuating system 290 may include a latch operating mechanism 239 that connects the latch element with the drive shaft 260. As another example, actuating system 290 may include a lock operating mechanism 280 that connects the lock element 240 with the drive shaft 260.

Illustratively, actuating system 290 may include a drive shaft actuating mechanism 250. The drive shaft actuating mechanism 250 may move the latch element 230 via the drive shaft 260 and the latch operating mechanism 239 and the lock element 240 via the drive shaft 260 and the lock operating mechanism 280.

As an example, actuating the drive shaft actuating mechanism 250 may move the latch element 230 and the lock element 240 such that the door transitions from a secured and locked state to an unlocked and unlatched state. As another example, actuating the drive shaft actuating mechanism 250 may move the latch element 230 and the lock element 240 such that the door transitions from an unlocked and unlatched state to a secured and locked state, whereby the door leaf 210 is in a closed position when the door is in the secured and locked state. The door leaf 210 is movable from the closed position to an opened position or from an opened position to the closed position when the door is in the unlocked and unlatched state.

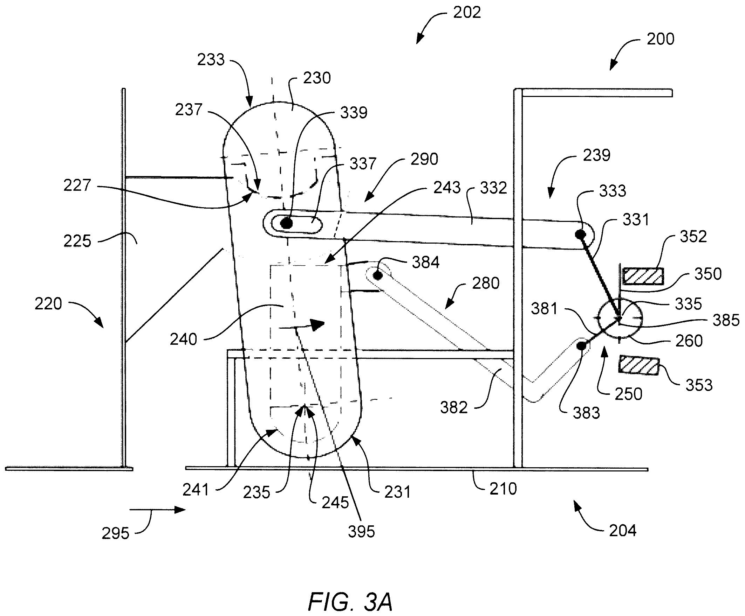

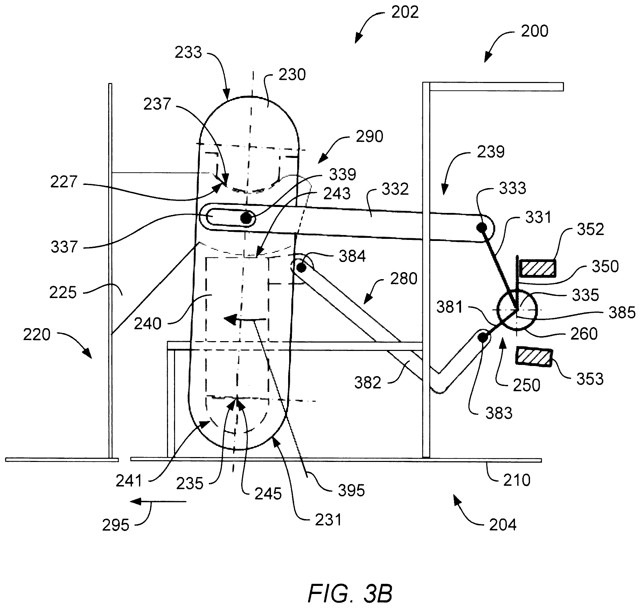

Illustratively, drive shaft actuating mechanism 250 may include an electric motor and/or a lever that act on drive shaft 260. By way of example, drive shaft actuating mechanism 250 may include a drive shaft lever such as drive shaft lever 350 of Figure 3A and Figure 3B.

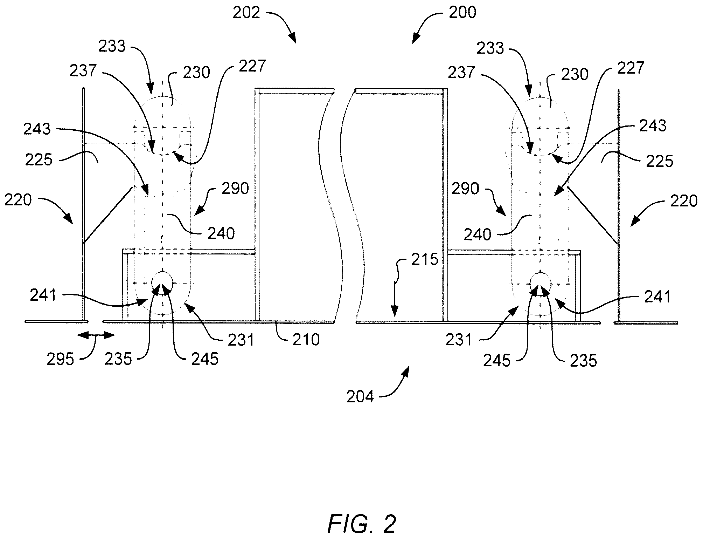

Figure 2 is a diagram of an illustrative door 200 that is adapted to separating of a first environment 202 with a first pressure and a second environment 204 with a second pressure that is smaller than the first pressure. Door 200 includes a door frame 220, a door leaf 210 that is adapted to closing of the door frame 220, and an actuating system 290. The door frame 220 includes a door stop 225. Door stop 225 has a first portion of a round shaped interface 227. The first portion of the round shaped interface 227 of door stop 225 is adapted for engaging with the actuating system 290.

As shown in Figure 2, actuating system 290 includes a latch element 230. Latch element 230 interacts with door stop 225 to latch the door leaf 210 such that the door 200 is in a latched state.

Latch element 230 includes a first end 231 and a second end 233. The first end 231 of latch element 230 has a movable connection 235 that movably connects the latch element 230 with the door leaf 210. The second end 233 of latch element 230 has a second portion of the round shaped interface 237. The second portion of the round shaped interface 237 of latch element 230 is adapted to engage with the first portion of the round shaped interface 227 of door stop 225.

The first and second portions of the round shaped interface 227, 237 may be implemented as a pair of round shaped cavity and round shaped protrusion. As an example, the first portion of the round shaped interface may be a round shaped cavity and the second portion of the round shaped interface may be a round shaped protrusion. As another example, the first portion of the round shaped interface may be a round shaped protrusion and the second portion of the round shaped interface may be a round shaped cavity.

It should be noted that for simplicity and brevity, the first portion of the round shaped interface 227 is described hereinafter as a round shaped cavity 227, and the second portion of the round shaped interface 237 is described hereinafter as a round shaped protrusion 237. However, if desired, the first portion of the round shaped interface 227 may be a round shaped protrusion and the second portion of the round shaped interface 237 a round shaped cavity.

The round shaped protrusion 237 of latch element 230 may have at least one of a spherical shape, a partially spherical shape, a cylindrical shape, or a partially cylindrical shape. Accordingly, the round shaped cavity 227 of door stop 225 may have an associated shape. Thus, the round shaped cavity 227 of door stop 225 may have at least one of a spherical shape, a partially spherical shape, a cylindrical shape, or a partially cylindrical shape.

Figure 2 shows the illustrative door 200 in a latched state in which the door leaf 210 is in the closed position and the latch element 230 engages with the door stop 225 to latch the door 200. Consider the scenario in which the door 200 is in the latched state and the first pressure of the first environment 202 (e.g., inside an aircraft such as aircraft 100 of Figure 1A) is greater than the second pressure of the second environment 204 (e.g., outside the aircraft 100 of Figure 1).

In this scenario, the difference between the first pressure and the second pressure puts a pressure 215 on the door leaf 210 such that the round shaped protrusion 237 of the latch element 230 is pushed into the round shaped cavity 227 of the door stop 225. If desired, the door leaf 210 moves at the movable connection 235 relative to the latch element 230, thereby performing an adjustment 295 of the position of the door leaf 210 relative to the door frame 220.

For example, latch element 230 may pivot around the movable connection 235 relative to the door leaf 210. If desired, the movable connection 235 may include at least one of a bearing, a hinge, a bolt, a fork, or a rod.

As shown in Figure 2, the actuating system 290 includes a lock element 240. Lock element 240 includes a first end 241 and a second end 243. The first end 241 has a movable connection 245. Movable connection 245 may movably connect the lock element 240 with the door leaf 210 and/or with latch element 230. If desired, lock element 240 may share the movable connection 245 with latch element 230. Thus, movable connections 235 and 245 may be combined with each other to provide a single movable connection to latch element 230 and lock element 240.

The second end 243 of lock element 240 interacts with the door stop 220 to secure the latch element 230 such that the door 200 is in a secured and locked state. Thus, as shown in Figure 2, door leaf 210 is in the closed position and the door 200 is not only in a latched state, but also in a secured and locked state. Thereby, when the door 200 is in the latched state, lock element 240 secures latch element 230 from being opened independent of the pressure 215 on door leaf 210.

Illustratively, in the secured and locked state in which the door leaf 210 is in the closed position, the round shaped protrusion 237 of the latch element 230 and the round shaped cavity 227 of the door stop 225 together with pressure 215 on door leaf 210 may ensure that no force or torque tends to disengage the latch element 230. Opening of the latch element 230 may occur in combination with an inward movement (i.e., against the pressure 215) of door leaf 210. Since the lock element 240 blocks any inward movement of the door leaf 210 that would be required for opening the latch element 230, the lock element 240 secures (or monitors) the latch element 230 and maintains the door 200 in the secured and locked state.

Figure 3A and Figure 3B are diagrams of an illustrative door 200 with an actuating system 290 and a door leaf 210 that performs an adjustment 295 of the position of door leaf 210 in a first direction (Figure 3A) and in a second direction (Figure 3B) relative to a door frame 220 in accordance with some embodiments.

The illustrative door 200 of Figure 3A and Figure 3B is shown in a latched state in which the door leaf 210 is in the closed position and the latch element 230 engages with the door stop 225 to latch the door 200. As shown in Figure 3A and Figure 3B, lock element 240 may interact with the door stop 220 to secure the latch element 230 such that the door 200 is in a secured and locked state. Thus, as shown in Figure 3A and Figure 3B, door leaf 210 is in the closed position and the door 200 is not only in a latched state, but also in a secured and locked state.

Illustratively, the actuating system 290 may include drive shaft 260, latch operating mechanism 239, lock operating mechanism 280, and drive shaft actuating mechanism 250. The drive shaft actuating mechanism 250 may move the latch element 230 via the drive shaft 260 and the latch operating mechanism 239 and the lock element 240 via the drive shaft 260 and the lock operating mechanism 280.

By way of example, the drive shaft actuating mechanism 250 of actuating system 290 may include drive shaft lever 350 and first and second drive shaft lever stops 352, 353. If desired, the drive shaft lever 350 may be fixedly attached to the drive shaft 260 and pivotally movable around the drive shaft 260 between the first and second drive shaft lever stops 352, 353.

As an example, the door 200 is in the secured and locked state when the drive shaft lever 350 is at the first drive shaft lever stop 352. As another example, the door 200 is in the unlocked and unlatched state when the drive shaft lever 350 is at the second drive shaft lever stop 353.

Illustratively, the latch operating mechanism 239 may connect the latch element 230 with the drive shaft 260. Latch operating mechanism 239 may include lever 331. Lever 331 may be fixedly attached to drive shaft 260 at a fixed connection 335.

By way of example, the latch operating mechanism may include an additional lever 332. The additional lever 332 may be a rod that is pivotally connected with lever 331 at a pivotable connection 333. If desired, the additional lever 332 may include a long hole 337. The long hole 337 may be adapted to receive a connecting device from the latch element 230.

For example, latch element 230 may include a bolt 339. Bolt 339 may connect the latch element 230 with the additional lever 332 at the long hole 337. The bolt 339 may be slidable in the long hole 337 such that the latch element 230 is movable relative to the additional lever 332, if desired.

Illustratively, the lock operating mechanism 280 may connect the lock element 240 with the drive shaft 260. Lock operating mechanism 280 may include lever 381. Lever 381 may be fixedly attached to drive shaft 260 at a fixed connection 385.

By way of example, the lock operating mechanism 280 may include an additional lever 382. The additional lever 382 may be a rod that is pivotally connected with lever 381 at a pivotable connection 383. If desired, the additional lever 382 may be pivotally connected with the second end 243 of the lock element 240 at another pivotable connection 384.

Pivotable connections 333, 383, and/or 384 may include any connection that allow for a rotation of the components that are connected by the pivotable connections relative to each other. For example, pivotable connections 333, 383, and/or 384 may include at least one of a bearing, a hinge, a bolt, a fork, or a rod.

As an example, consider the scenario in which door 200 is in the secured and locked state and has a plurality of door stops 225, whereby the door stops 225 are deflected such that the distance between the door stops 225 on opposite sides of door frame 220 (e.g., the distance between the door stops that correspond to the left side 222 and the right side 224 of door leaf 210 of Figure 1B) is greater than nominal.

In this scenario, the round shaped protrusion 237 of latch element 230 may be pushed into the round shaped cavity 227 of door stop 225 and the latch element 230 may perform a pendulum movement 395. The long hole 337 may enable the pendulum movement 395 of latch element 230 such that the latch element 239 is prevented from affecting the latch operating mechanism 239.

During the pendulum movement 395, the door leaf 210 moves at the movable connection 235 (e.g., rotates around the movable connection 235) relative to the latch element 230, thereby performing a horizontal adjustment 295 of the position of the door leaf 210 relative to the door frame 220 as shown in Figure 3A.

As another example, consider the scenario in which door 200 is in the secured and locked state and has a plurality of door stops 225, whereby the door stops 225 are deflected such that the distance between the door stops 225 on opposite sides of door frame 220 (e.g., the distance between the door stops that correspond to the left side 222 and the right side 224 of door leaf 210 of Figure 1B) is smaller than nominal.

In this scenario, the round shaped protrusion 237 of latch element 230 may be pushed into the round shaped cavity 227 of door stop 225 and the latch element 230 may perform a pendulum movement 395, whereby the door leaf 210 moves at the movable connection 235 (e.g., rotates around the movable connection 235) relative to the latch element 230, thereby performing a horizontal adjustment 295 of the position of the door leaf 210 relative to the door frame 220 as shown in Figure 3B.

Figure 3A and Figure 3B show adjustments 295 of the position of door leaf 210 relative to the door frame 220 in horizontal direction (i.e., in a direction that is orthogonal to drive shaft 260, or, in other words, between the left side 222 and the right side 224 of door leaf 210 of Figure 1B). If desired, door leaf 210 may also adjust the position of door leaf 210 in vertical direction (i.e., in direction of drive shaft 260, or, in other words, between the upper side 226 and the lower side 228 of door leaf 210 of Figure 1B) if desired.

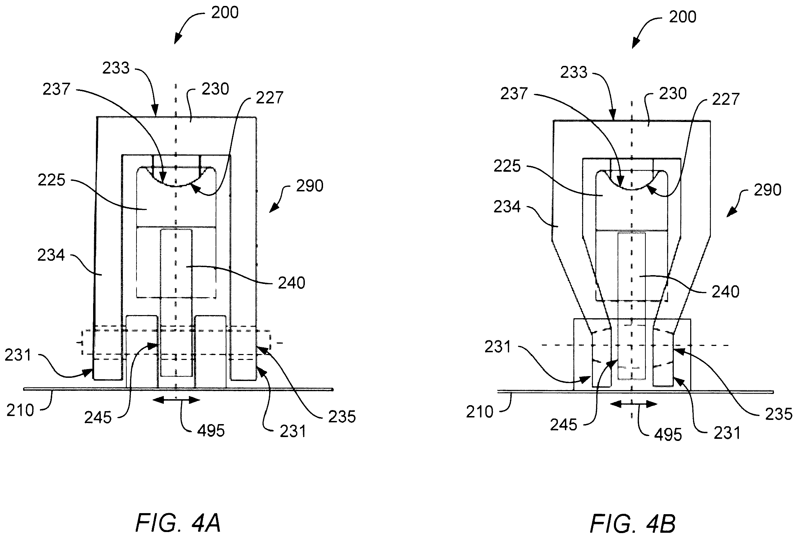

Figures 4A and 4B are diagrams of illustrative latch mechanisms 230 and lock mechanisms 240 (e.g., latch mechanisms 230 and lock mechanisms 240 of Figure 3A or Figure 3B) that allow for vertical adjustments 495 of door leaf 210 relative to door frame 220.

As shown in Figures 4A and 4B, latch element 230 may have a round shaped protrusion 237 with a spherical or partially spherical surface, and door stop 225 may have an associated round shaped cavity 227 with a spherical or partially spherical surface. Thus, the round shaped protrusion 237 of latch element 230 may slide within the round shaped cavity 227 of door stop 225, and thereby perform a pendulum movement, in any direction (i.e., in horizontal direction, vertical direction, or any combination thereof).

As an example, the movable connection 235 of latch element 230 and the movable connection 245 of lock element 240 may include a flexible side beam as shown in Figure 4A to provide the door leaf 210 with the necessary degree of freedom relative to the latch element 230 and the lock element 240, thereby enabling an adjustment of the door leaf 210 relative to the door frame in vertical direction.

As another example, the movable connection 235 of latch element 230 and the movable connection 245 of lock element 240 may include a flexible bearing as shown in Figure 4B to provide the door leaf 210 with the necessary degree of freedom relative to the latch element 230 and the lock element 240, thereby enabling an adjustment of the door leaf 210 relative to the door frame in vertical direction.

As shown in Figure 4A, latch element 230 may have a U-shaped body 234. However, the body 234 of latch element 230 may have any shape. For example, the body 234 of latch element 230 may be V-shaped, W-shaped, U-shaped with a bottleneck as shown in Figure 4B, etc.

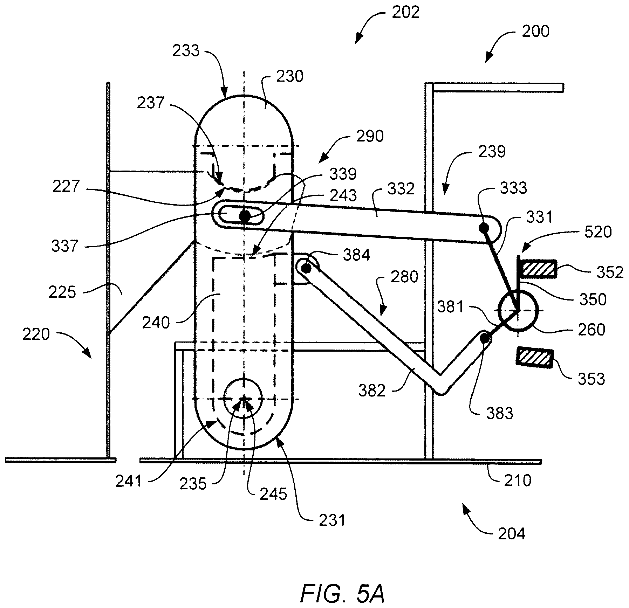

Figures 5A to 5E show an illustrative opening sequence of a door 200 that is adapted to separating of a first environment 202 with a first pressure and a second environment 204 with a second pressure that is smaller than the first pressure. Door 200 includes a door frame 220 with a door stop 225 that has a round shaped cavity 227, a door leaf 210 that is adapted to closing of the door frame 220, as well as an actuating system 290 as described above with reference to Figures 1B to 4B.

For example, actuating system 290 may include a drive shaft 260, a latch operating mechanism 239 that connects latch element 230 with the drive shaft 260, and a lock operating mechanism 280 that connects lock element 240 with the drive shaft 260.

Illustratively, latch operating mechanism 239 may include a first lever 331 that is fixedly attached to the drive shaft 260 at a fixed connection 335, and a second lever 332 (e.g., a rod) that is pivotally connected with the first lever 331 at a pivotable connection 333. A long hole 337 and a bolt 339 may connect the second lever 332 with latch element 230.

By way of example, lock operating mechanism 280 may include a first lever 381 that is fixedly attached to the drive shaft 260 at a fixed connection 385, and a second lever 382 (e.g., a rod) that is pivotally connected with the first lever 381 at a first pivotable connection 383 and with lock element 240 at a second pivotable connection 384.

Consider the scenario in which the fixed connections 335 and 385 are placed at the axis around which the drive shaft 260 rotates. In this scenario, a rotation of drive shaft 260 may induce a rotation of levers 331, 381 around the axis around which the drive shaft 260 rotates. Drive shaft actuating mechanism 250 may induce a rotation of drive shaft 260, if desired.

Figure 5A is a diagram of the illustrative door 200 in the secured and locked state in which the door leaf 210 is in the closed position. In the secured and locked state, the drive shaft lever 350 may be in a first position 520. In the first position 520, the drive shaft lever 350 may be close to drive shaft lever stop 352.

In the secured and locked state, the round shaped protrusion 237 of the latch element 230 may be pushed into the round shaped cavity 227 of the door stop 225, and the lock element 240 may interact with the door stop 225 to secure the latch element 230 such that the round shaped protrusion 237 is prevented from disengaging with the round shaped cavity.

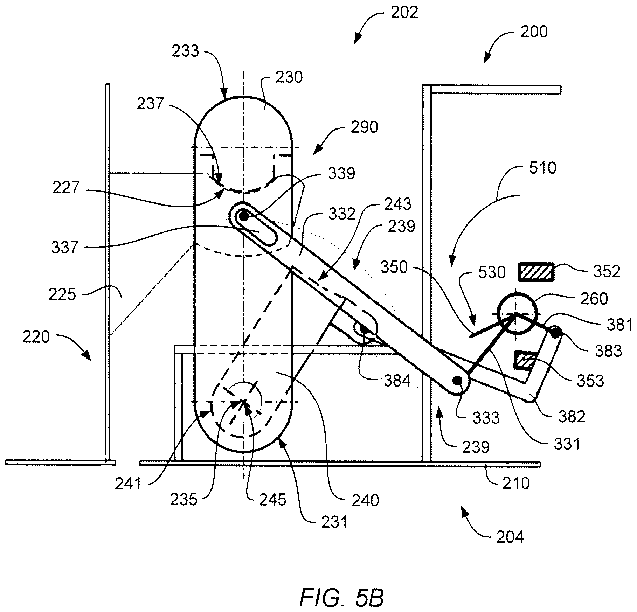

Figure 5B is a diagram of the illustrative door 200 of Figure 5A in a latched and unlocked state with latch element 230 and lock element 240 in the latched and unsecured position. Illustratively, a drive shaft lever movement 510 (e.g., performed by an operator or by a rotational movement via drive shaft 260) may have moved drive shaft lever 350 from drive shaft lever position 520 of Figure 5A to drive shaft lever position 530 of Figure 5B.

Since levers 331 and 381 are fixedly attached to drive shaft 260 at fixed connections 335, 385, respectively, the rotation of drive shaft 260 that is associated with the drive shaft lever movement 510 may cause a rotation of lever 331 and lever 381 around an axis defined by drive shaft 260.

Illustratively, the rotation of lever 331 may cause a movement of lever 332 via pivotable connection 333. The movement of lever 332 may cause long hole 337 to move around bolt 339 without pulling or pushing latch element 230. Thus, latch element 230 may stay in the latched position during drive shaft lever movement 510.

The rotation of lever 381 may cause a movement of lever 382 via pivotable connection 383. Thus, lever 382 may pull via pivotable connection 384 at lock element 240, thereby rotating lock element 240 around an axis defined by movable connection 245 and transitioning lock element 240 from the secured to an unsecured position. Hence, door 200 is in a latched and unlocked state.

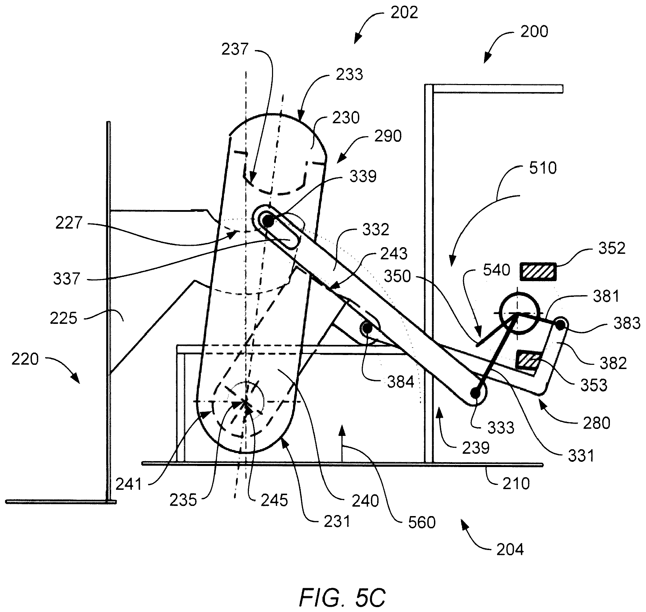

Since the lock element 240 no longer secures the latch element 230, the round shaped protrusion 237 of latch element 230 is free to disengage from the round shaped cavity 227 of door stop 225. For example, door leaf movement 560 of Figure 5C may move door leaf 210 from a closed position to a partially opened position.

Figure 5C is a diagram of the illustrative door 200 in a partially unlatched and unlocked state with latch and lock mechanism 230, 240 of Figure 5A in a partially unlatched and unsecured position and with an inward moved door leaf 210.

The inward door leaf movement 560 may disengage the round shaped protrusion 237 of latch element 230 from the round shaped cavity 227 of door stop 225, thereby disengaging latch element 230 from door stop 225. Thus, as shown in Figure 5C, latch operating mechanism 239 may freely move latch element 230.

Illustratively, a further drive shaft lever movement 510 (e.g., performed by an operator or by a rotational movement via drive shaft 260) may have moved drive shaft lever 350 from drive shaft lever position 530 of Figure 5B to drive shaft lever position 540 of Figure 5C.

The further rotation of drive shaft 260 that is associated with the drive shaft lever movement 510 may cause a further rotation of lever 331 and lever 381 around the axis defined by drive shaft 260.

Illustratively, the further rotation of lever 331 may cause a movement of lever 332 via pivotable connection 333. Thus, lever 332 may pull via long hole 337 and bolt 339 at latch element 230, thereby rotating latch element 230 around an axis defined by movable connection 235 and transitioning latch element 230 from the latched to a partially unlatched position.

The further rotation of lever 381 may cause a further movement of lever 382 via pivotable connection 383. Thus, lever 382 may pull via pivotable connection 384 at lock element 240, thereby further rotating lock element 240 around the axis defined by movable connection 245 and moving lock element 240 clear of door stop 225. Hence, door 200 is in a partially unlatched and unlocked state.

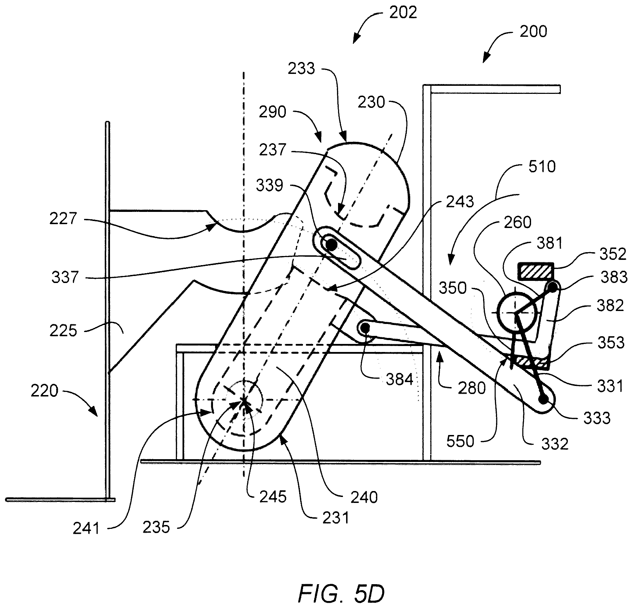

Figure 5D is a diagram of the illustrative door 200 of Figure 5A in an unlatched and unlocked state with latch element 230 and lock element 240 in a fully unlatched and unsecured position after a further drive shaft lever movement 510 from drive shaft lever position 540 of Figure 5C to drive shaft lever position 550 of Figure 5D. In drive shaft lever position 540, drive shaft lever 350 is at drive shaft lever stop 353.

The further rotation of drive shaft 260 in Figure 5D compared to Figure 5C, which is associated with the further drive shaft lever movement 510, may cause a further rotation of lever 331 and lever 381 around the axis defined by drive shaft 260.

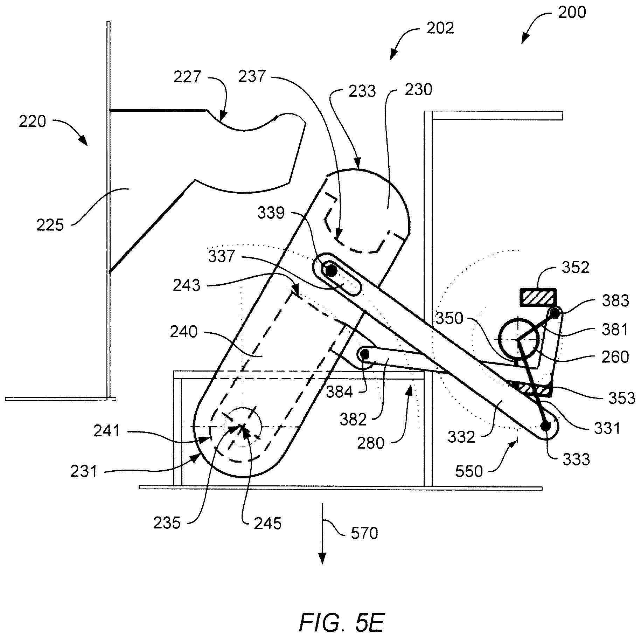

Illustratively, the further rotation of lever 331 may cause a movement of lever 332 via pivotable connection 333. Thus, lever 332 may further pull via long hole 337 and bolt 339 at latch element 230, thereby rotating latch element 230 around an axis defined by movable connection 235. The further rotation of latch element 230 around the axis defined by movable connection 235 moves the round shaped protrusion 237 clear of door stop 225. Thus, latch element 230 has moved from the partially unlatched position to the unlatched position in which door leaf 210 may be pushed outside as illustrated by door leaf movement 570 of Figure 5E.

Figure 5E is a diagram of the illustrative door 200 of Figure 5A in an unlatched and unlocked state with latch element 230 and lock element 240 clear of door stop 225. As shown in Figure 5E and compared to Figure 5D, door leaf 210 has performed door leaf movement 570. In fact, door leaf 210 has been pushed outside past door frame 220. If desired, in a further movement, door leaf 210 may be pushed away in a translational or rotational movement from the door frame 220 to completely open door 200.

For example, the latch elements 230 of Figure 1B are shown to be on the left side 222 and the right side 224 of door leaf 210. However, latch elements 230 may also be installed on the upper side 226 and on the lower side 228 of door leaf 210, if desired.

Furthermore, latch element 230 of Figures 4A and 4B has a U-shaped body 234 or a U-shaped body 234 with a bottleneck. Latch element 230 is further shown with two connections with door leaf 210. However, the body 234 of latch element 230 may be L-shaped or bracket-shaped and have a single connection with door leaf 210, if desired.

Moreover, the latch operating mechanism 239 and the latch element 230 are shown in Figures 3A, 3B, and 5A to 5E to be connected by a long hole 337 and a bolt 339. However, any movable connection that allows for a longitudinal movement of lever 333 relative to latch element 230 may be used instead.

Additionally, lever 332 of latch operating mechanism 239 of Figures 3A, 3B, and 5A to 5E is shown to be straight. However, lever 332 may have any shape. For example, lever 332 may be elliptical, round, L-shaped, etc. as long as a rotation of drive shaft 260 is adapted to pull at end 233 of latch element 230 such that latch element 230 disengages from door stop 225.

Similarly, lever 381 of lock operating mechanism 280 of Figures 3A, 3B, and 5A to 5E is shown to be L-shaped. However, lever 381 may have any shape. For example, lever 381 may be elliptical, round, straight, etc. as long as a rotation of drive shaft 260 is adapted to provoke pulling at end 243 of lock element 240 such that lock element 240 disengages from door stop 225.

### Reference List

100 aircraft
102 aircraft airframe, fuselage
103a aircraft passenger cabin
103b aircraft cargo deck
103c aircraft flight deck
104 aircraft door
104a, 104b, 104c, 104d cabin access doors
104e cargo deck access door
200 door
202 environment with greater pressure
204 environment with smaller pressure
210 door leaf
215 pressure on door leaf
220 door frame
222 left side of door leaf
224 right side of door leaf
225 door stop
226 upper side of door leaf
227 round shaped cavity, portion of round shaped interface
228 lower side of door leaf
230 latch element
231, 233 end of latch element
234 body of latch element
235 movable connection
237 round shaped protrusion, portion of round shaped interface
239 latch operating mechanism
240 lock element
241, 243 end of lock element
245 movable connection
250 drive shaft actuating mechanism
260 drive shaft
270 beam
280 lock operating mechanism
290 actuating system
295 horizontal adjustment, door leaf movement
331, 332 lever
333 pivotable connection
335 fixed connection
337 long hole
339 bolt
350 drive shaft lever
352, 353 drive shaft lever stop
381, 382 lever
383, 384 pivotable connection
385 fixed connection
395 pendulum movement
495 vertical adjustment, door leaf movement
510 drive shaft lever movement
520, 530, 540, 550 drive shaft lever position
560, 570 door leaf movement

## Claims

1. A door (200) that is adapted to separate a first environment (202) with a first pressure and a second environment (204) with a second pressure that is smaller than the first pressure, comprising:
a door frame (220) that comprises a door stop (225);
a door leaf (210) that is adapted to close the door frame (220); and
an actuating system (290) that comprises a latch element (230) that interacts with the door stop (225) to latch the door leaf (210) such that the door (200) is in a latched state;
wherein
the door stop (225) comprises a first portion of a round shaped interface (227), and
the latch element (230) comprises a first end (231) with a movable connection (235) that movably connects the latch element (230) with the door leaf (210), and a second end (233) that has a second portion of the round shaped interface (237), wherein, in the latched state, the difference between the first pressure and the second pressure puts a pressure (215) on the door leaf (210) such that the second portion of the round shaped interface (237) engages with the first portion of the round shaped interface (227) and the door leaf (210) moves at the movable connection (235) relative to the latch element (230), thereby performing an adjustment (295) of the position of the door leaf (210) relative to the door frame (220) and wherein the actuating system (290) further comprises:
a lock element (240) that comprises a first end (241) with a movable connection (245), and a second end (243) that interacts with the door stop (220) to secure the latch element (230) such that the door (200) is in a secured and locked state.

2. The door (200) of claim 1, wherein the second portion of the round shaped interface (237) comprises a round shaped cavity or a round shaped protrusion with at least one of a spherical shape, a partially spherical shape, a cylindrical shape, or a partially cylindrical shape.

3. The door (200) of claims 1 or 2, wherein the latch element (230) pivots around the movable connection (235) relative to the door leaf (210).

4. The door (200) of claim 3, wherein the movable connection (235) comprises at least one of a bearing, a hinge, a bolt, a fork, or a rod.

5. The door (200) of claim 1, wherein the actuating system (290) further comprises:
a drive shaft (260);
a latch operating mechanism (239) that connects the latch element (230) with the drive shaft (260); and
a lock operating mechanism (280) that connects the lock element (240) with the drive shaft (260).

6. The door (200) of claim 5, wherein the actuating system (290) further comprises:
a drive shaft actuating mechanism (250) that moves the latch element (230) via the drive shaft (260) and the latch operating mechanism (239) and that moves the lock element (240) via the drive shaft (260) and the lock operating mechanism (280), such that the door (200) transitions between the secured and locked state and an unlocked and unlatched state.

7. The door (200) of claim 6, wherein the door leaf (210) is in a closed position when the door (200) is in the secured and locked state and wherein the door leaf (210) is movable from the closed position to an opened position when the door (200) is in the unlocked and unlatched state.

8. The door (200) of claim 7, wherein a move of the door leaf (210) from the closed position to the opened position comprises an inward door leaf movement (560) that disengages the second portion of the round shaped interface (237) from the first portion of the round shaped interface (227).

9. The door (200) of claim 5, wherein the latch operating mechanism (239) further comprises:
a lever (331) that is fixedly attached to the drive shaft (260) at a fixed connection (335).

10. The door (200) of claim 9, wherein the latch operating mechanism (239) further comprises:
an additional lever (332) that is pivotally connected with the lever (331) at a pivotable connection (333) and that comprises a long hole (337).

11. The door (200) of claim 10, wherein the latch element (230) comprises a bolt (339) that connects the latch element (230) with the additional lever (332) at the long hole (337), wherein the bolt (339) is slidable in the long hole (337) such that the latch element (230) is movable relative to the additional lever (332).

12. The door (200) of claim 5, wherein the lock operating mechanism (280) further comprises:
a lever (381) that is fixedly attached to the drive shaft (260) at a fixed connection (385).

13. The door (200) of claim 12, wherein the lock operating mechanism (280) further comprises:
an additional lever (382) that is pivotally connected with the lever (381) at a first pivotable connection (383) and with the second end (243) of the lock element (240) at a second pivotable connection (384).

14. An aircraft (100) comprising at least one door (200) of any one of the preceding claims.

## Patentansprüche

1. Tür (200), die eingerichtet ist, eine erste Umgebung (202) mit einem ersten Druck und eine zweite Umgebung (204) mit einem zweiten Druck, der kleiner als der erste Druck ist, zu trennen, umfassend:
einen Türrahmen (220), der einen Türanschlag (225) umfasst;
ein Türblatt (210), das eingerichtet ist, um den Türrahmen (220) zu verschließen; und
ein Betätigungssystem (290), das ein Verriegelungselement (230) umfasst, das mit dem Türanschlag (225) zusammenwirkt, um das Türblatt (210) zu verriegeln, so dass sich die Tür (200) in einem verriegelten Zustand befindet; wobei
der Türanschlag (225) einen ersten Abschnitt einer rund geformten Grenzfläche (227) umfasst, und
das Verriegelungselement (230) ein erstes Ende (231) mit einer beweglichen Verbindung (235), die das Verriegelungselement (230) beweglich mit dem Türblatt (210) verbindet, und ein zweites Ende (233) umfasst, das einen zweiten Abschnitt der rund geformten Grenzfläche (237) aufweist, wobei in dem verriegelten Zustand die Differenz zwischen dem ersten Druck und dem zweiten Druck einen Druck (215) auf das Türblatt (210) ausübt, so dass der zweite Abschnitt der rund geformten Grenzfläche (237) mit dem ersten Abschnitt der rund geformten Grenzfläche (227) in Eingriff steht und das Türblatt (210) sich an der beweglichen Verbindung (235) relativ zu dem Verriegelungselement (230) bewegt und dadurch eine Anpassung (295) der Position des Türblattes (210) relativ zu dem Türrahmen (220) bewirkt, und wobei das Betätigungssystem (290) ferner umfasst:
ein Sperrelement (240), das ein erstes Ende (241) mit einer beweglichen Verbindung (245) und ein zweites Ende (243) umfasst, das mit dem Türanschlag (220) zusammenwirkt, um das Verriegelungselement (230) zu sichern, so dass die Tür (200) in einem gesicherten und verriegelten Zustand ist.

2. Tür (200) nach Anspruch 1, bei der der zweite Abschnitt der rund geformten Grenzfläche (237) einen rund geformten Hohlraum oder einen rund geformten Vorsprung von kugelförmiger, teilkugelförmiger, zylindrischer oder teilzylindrischer Gestalt umfasst.

3. Tür (200) nach Anspruch 1 oder 2, bei der das Verriegelungselement (230) um die bewegliche Verbindung (235) relativ zum Türblatt (210) schwenkt.

4. Tür (200) nach Anspruch 3, bei der die bewegliche Verbindung (235) mindestens eines von einem Lager, einem Scharnier, einem Bolzen, einer Gabel oder einer Stange umfasst.

5. Tür (200) nach Anspruch 1, bei der das Betätigungssystem (290) ferner umfasst:
eine Antriebswelle (260);
einen Verriegelungsbetätigungsmechanismus (239), der das Verriegelungselement (230) mit der Antriebswelle (260) verbindet; und
einen Sperrbetätigungsmechanismus (280), der das Sperrelement (240) mit der Antriebswelle (260) verbindet.

6. Tür (200) nach Anspruch 5, bei der das Betätigungssystem (290) ferner umfasst:
einen Antriebswellen-Betätigungsmechanismus (250), der das Verriegelungselement (230) mittels der Antriebswelle (260) und des Verriegelungsbetätigungsmechanismus (239) bewegt und der das Sperrelement (240) mittels der Antriebswelle (260) und des Sperrbetätigungsmechanismus (280) bewegt, so dass die Tür (200) zwischen dem gesicherten und gesperrten Zustand und einem entsperrten und unverriegelten Zustand übergeht.

7. Tür (200) nach Anspruch 6, bei der sich das Türblatt (210) in einer geschlossenen Position befindet, wenn sich die Tür (200) in dem gesicherten und gesperrten Zustand befindet, und bei der das Türblatt (210) von der geschlossenen Position in eine offene Position bewegbar ist, wenn sich die Tür (200) in dem entsperrten und unverriegelten Zustand befindet.

8. Tür (200) nach Anspruch 7, bei der eine Bewegung des Türblatts (210) von der geschlossenen Position in die offene Position eine nach innen gerichtete Türblattbewegung (560) umfasst, die den zweiten Abschnitt der rund geformten Grenzfläche (237) von dem ersten Abschnitt der rund geformten Grenzfläche (227) trennt.

9. Tür (200) nach Anspruch 5, bei der der Verriegelungsbetätigungsmechanismus (239) ferner einen Hebel (331) umfasst, der an einer festen Verbindung (335) fest mit der Antriebswelle (260) verbunden ist.

10. Tür (200) nach Anspruch 9, bei der der Verriegelungsbetätigungsmechanismus (239) ferner einen zusätzlichen Hebel (332) umfasst, der an einer schwenkbaren Verbindung (333) mit dem Hebel (331) schwenkbar verbunden ist und ein Langloch (337) umfasst.

11. Tür (200) nach Anspruch 10, bei der das Verriegelungselement (230) einen Bolzen (339) umfasst, der das Verriegelungselement (230) mit dem zusätzlichen Hebel (332) an dem Langloch (337) verbindet, wobei der Bolzen (339) in dem Langloch (337) verschiebbar ist, so dass das Verriegelungselement (230) relativ zu dem zusätzlichen Hebel (332) beweglich ist.

12. Tür (200) nach Anspruch 5, bei der der Sperrbetätigungsmechanismus (280) ferner einen Hebel (381) umfasst, der an einer festen Verbindung (385) fest mit der Antriebswelle (260) verbunden ist.

13. Tür (200) nach Anspruch 12, bei der der Sperrbetätigungsmechanismus (280) ferner einen zusätzlichen Hebel (382) umfasst, der mit dem Hebel (381) an einer ersten schwenkbaren Verbindung (383) und mit dem zweiten Ende (243) des Sperrelements (240) an einer zweiten schwenkbaren Verbindung (384) schwenkbar verbunden ist.

14. Luftfahrzeug (100), das mindestens eine Tür (200) nach einem der vorhergehenden Ansprüche umfasst.

## Revendications

1. Porte (200) qui est configurée pour séparer un premier environnement (202) avec une première pression d'un second environnement (204) avec une seconde pression laquelle est inférieure à la première pression comprenant :
un cadre de porte (220) qui comprend une butée de porte (225);
un battant de porte (210) qui est configuré pour obturer le cadre de porte (220) ; et
un système d'actionnement (290) qui comprend un élément de fermeture (230) qui interagit avec la butée de porte (225) pour verrouiller le battant de porte (210) de façon que la porte (200) soit dans un état verrouillé ;
dans laquelle :
la butée de porte (225) comprend une première partie (227) d'une interface de forme arrondie, et
l'élément de fermeture (230) comprend une première extrémité (231) avec un raccordement déplaçable (235) qui raccorde de façon déplaçable l'élément de fermeture (230) au battant de porte (210), et une seconde extrémité (233) qui a une seconde partie (237) de l'interface de forme arrondie, dans laquelle, dans l'état verrouillé, la différence entre la première pression et la seconde pression exerce une pression (215) sur le battant de porte (210) de façon que la seconde partie (237) de l'interface de forme arrondie vient en prise avec la première partie (227) de l'interface de forme arrondie et de façon que le battant de porte (210) se déplace à l'emplacement du raccordement déplaçable (235) par rapport à l'élément de fermeture (230), opérant de ce fait un ajustement (295) de la position du battant de porte (210) par rapport au cadre de porte (220) et dans laquelle le système d'actionnement (290) comprend en outre :
un élément de verrouillage (240) qui comprend une première extrémité (241) avec un raccordement déplaçable (245), et une seconde extrémité (243) qui interagit avec la butée de porte (220) pour fixer l'élément de fermeture (230) de façon que la porte (200) soit dans un état fixe et verrouillé.

2. Porte (200) selon la revendication 1, dans laquelle la seconde partie (237) de l'interface de forme arrondie comprend une cavité de forme arrondie ou une protrusion de forme arrondie présentant au moins l'une parmi une forme sphérique, une forme partiellement sphérique, une forme cylindrique, ou une forme partiellement cylindrique.

3. Porte (200) selon l'une des revendications 1 ou 2, dans laquelle l'élément de fermeture (230) pivote autour du raccordement déplaçable (235) par rapport au battant de porte (210).

4. Porte (200) selon la revendication 3, dans laquelle le raccordement déplaçable (235) comprend au moins l'un parmi un palier, une articulation, un axe, une fourche, ou une tige.

5. Porte (200) selon la revendication 1, dans laquelle le système d'actionnement (290) comprend en outre :
un arbre d'entrainement (260) ;
un mécanisme (239) de fonctionnement de fermeture qui raccorde l'élément de fermeture (230) à l'arbre d'entrainement (260) ; et
un mécanisme (280) de fonctionnement de verrouillage qui raccorde l'élément de verrouillage (240) à l'arbre d'entrainement (260).

6. Porte (200) selon la revendication 5, dans laquelle le système d'actionnement (290) comprend en outre :
un mécanisme d'actionnement d'arbre d'entrainement (250) qui déplace l'élément de fermeture (230) via l'arbre d'entrainement (260) et le mécanisme (239) de fonctionnement de fermeture et qui déplace l'élément de verrouillage (240) via l'arbre d'entrainement (260) et le mécanisme (280) de fonctionnement de verrouillage, de façon que la porte (200) passe de l'état fixe et verrouillé à un état non verrouillé et non fixe.

7. Porte (200) selon la revendication 6, dans laquelle le battant de porte (210) est dans une position fermée lorsque la porte (200) est dans l'état fixe et verrouillé et dans laquelle le battant de porte (210) est déplaçable depuis la position fermée jusqu'à une position ouverte lorsque la porte (200) est dans l'état non verrouillé et non fixe.

8. Porte (200) selon la revendication 7, dans laquelle un déplacement du battant de porte (210) depuis la position fermée jusqu'à la position ouverte comprend un déplacement vers l'intérieur (560) du battant de porte qui libère la seconde partie (237) de l'interface de forme arrondie de la première partie (227) de l'interface de forme arrondie.

9. Porte (200) selon la revendication 5, dans laquelle le mécanisme (239) de fonctionnement de fermeture comprend en outre :
un levier (331) qui est attaché de manière fixe sur l'arbre d'entrainement (260) à l'emplacement d'un raccordement (335) fixe.

10. Porte (200) selon la revendication 9, dans laquelle le mécanisme (239) de fonctionnement de fermeture comprend en outre :
un levier supplémentaire (332) qui est raccordé à pivotement au levier (331) à un emplacement d'un raccordement (333) à pivotement et qui comprend un trou oblong (337).

11. Porte (200) selon la revendication 10, dans laquelle l'élément de fermeture (230) comprend un doigt (339) qui raccorde l'élément de fermeture (230) au levier supplémentaire (332) à l'emplacement du trou oblong (337), dans laquelle le doigt (339) est apte à coulisser dans le trou oblong (337) de façon que l'élément de fermeture (230) soit déplaçable par rapport au levier supplémentaire (332).

12. Porte (200) selon la revendication 5, dans laquelle le mécanisme (280) de fonctionnement de verrouillage comprend en outre :
un levier (381) qui est attaché de manière fixe sur l'arbre d'entrainement (260) à l'emplacement d'un raccordement (385) fixe.

13. Porte (200) selon la revendication 12, dans laquelle le mécanisme (280) de fonctionnement de verrouillage comprend en outre :
un levier supplémentaire (382) qui est raccordé à pivotement au levier (381) à l'emplacement d'un premier raccordement (383) à pivotement et à la seconde extrémité (243) de l'élément de verrouillage (240) à l'emplacement d'un second raccordement (384) à pivotement (384).

14. Aéronef (100) comprenant au moins une porte (200) selon l'une quelconque des revendications précédentes.
